# EUROPÄISCHE PATENTSCHRIFT

(11) **EP 2 620 049 B1**
(45) Veröffentlichungstag und Bekanntmachung des Hinweises auf die Patenterteilung: **27.01.2016**
(21) Anmeldenummer: 13000399.9
(22) Anmeldetag: 28.01.2013
(51) Int. Cl.: A01B 59/041, A01B 59/00

(54) **Stabilisator für einen Unter- und/oder Oberlenker eines Ackerschleppers**
Stabiliser for upper and/or lower link of a farm tractor
Stabilisateur pour les bras supérieures et/ou inférieures d'un tracteur agricole

(30) Priorität: 30.01.2012 DE 202012000868 U
(43) Veröffentlichungstag der Anmeldung: 31.07.2013
(73) Patentinhaber: JRS GmbH & Co. KG, 85119 Ernsgaden (DE)
(72) Erfinder: Sauermann, Hans, 85119 Ernsgaden (DE)
(74) Vertreter: Witzany, Manfred

(56) Entgegenhaltungen:
- EP-A1- 1 342 399
- DE-U1- 8 810 247
- US-A- 5 361 850
- US-A- 5 462 303

## Beschreibung

Die Erfindung betrifft einen Stabilisator für einen Unter- und/oder Oberlenker einer Drei-Punkt-Aufhängung eines Ackerschleppers gemäß dem Oberbegriff des Patentanspruchs 1.

Aus der DE 199 44 749 A1 ist ein Stabilisator für einen Unterlenker eines Ackerschleppers bekannt. Dieser Stabilisator weist ein Teleskop auf, welches von einem Rohr und einem darin laufenden Kolben gebildet ist. Zwischen beiden ist eine Feder vorgesehen, die den Kolben mit dem Rohr elastisch koppelt. Der Kolben ist zweistückig ausgebildet, wobei beide Teile mittels eines Gewindes gegeneinander verstellbar sind. Auf diese Weise ist die Kolbenlänge einstellbar. Dies ist wichtig, um die Länge des Stabilisators an die jeweiligen Bedürfnisse anpassen zu können. Um das Teleskop für die Fahrt auf einer öffentlichen Straße zu sperren, ist am Rohr ein Arretierbügel schwenkbar gehalten, der ein Widerlager des Kolbens übergreift. Dieser Stabilisator hat sich in der Praxis vielfach bewährt und bildet den Ausgangspunkt der vorliegenden Erfindung.

Aus der EP-A-1 342 399 ist ein Stabilisator für einen Unter- und/oder Oberlenker einer Drei-Punkt-Aufhängung eines Ackerschleppers bekannt. Dieser Stabilisator weist ein Teleskop bestehend aus einem Rohr und einem darin verschiebbar gehaltenen Kolben auf, die miteinander durch eine Feder elastisch gekoppelt sind. Der Kolben weist ein Gewinde auf, um eine Längenverstellbarkeit zu realisieren. Am Rohr ist ein Arretierbügel schwenkbar gehalten, der in einer Arretierstellung zwei Widerlager des Kolbens mittels Anschlagflächen übergreift. In einer Lösestellung ist das Teleskop dagegen frei bewegbar. Die Anschlagflächen des Arretierbügels sind durch eine weit nach oben ausgreifende Brücke miteinander zugfest verbunden. Diese Verbindung ist dabei einem beträchtlichen Biegemoment ausgesetzt.

Aus der US 5,361,850 A ist ein weiterer Stabilisator bekannt, bei dem die Anschlagflächen kulissenartig aus dem Arretierbügel frei geschnitten sind.

Aus der US 5,462,303 A ist ein weiterer Stabilisator bekannt, dessen Anschlagflächen oberseitig lochartig mit einer Brücke verbunden sind.

Aus der DE 88 10 247 U1 ist ein Stabilisator bekannt, der ein entsprechendes Widerlager nur einseitig ergreift. Damit stellt sich bei diesem Stabilisator das Problem der zugfesten Verbindung der Anschlagflächen nicht Der Erfindung liegt die Aufgabe zugrunde, einen Stabilisator der eingangs genannten Art zu schaffen, der sich durch eine hohe Belastbarkeit auszeichnet.

Diese Aufgabe wird erfindungsgemäß mit den Merkmalen des Patentanspruchs 1 gelöst.

Der Stabilisator gemäß Anspruch 1 dient hauptsächlich für Unterlenker, ist jedoch auch für Oberlenker einer Drei-Punkt-Aufhängung geeignet. Der Stabilisator hat die wesentliche Aufgabe, eine Seitenbewegung des Unter- bzw. Oberlenkers durch Federwirkung zu korrigieren. Damit ist eine schwimmende Ankupplung des daran befestigten Arbeitsgerätes möglich, was beispielsweise bei einem Pflug unerlässlich ist. Um dieser Aufgabe gerecht zu werden, weist der Stabilisator mindestens ein Teleskop auf, welches von einem Rohr und einem darin verschiebbar gehaltenen Kolben gebildet ist. Der Kolben und das Rohr sind durch mindestens eine Feder elastisch gekoppelt. Bei einer seitlichen Schwenkbewegung des Unter- bzw. Oberlenkers wird der Stabilisator gestaucht bzw. gedehnt, was zu einer entsprechenden Federkraft führt. Auf diese Weise wirkt der Stabilisator der Seitenbewegung elastisch entgegen, ohne sie vollends zu unterbinden. Ein mit der Drei-Punkt-Aufhängung des Ackerschleppers verbundenes Arbeitsgerät wird dadurch elastisch geführt. Da unterschiedliche Arbeitsgeräte sehr unterschiedliche Breiten aufweisen können, ist es erforderlich, den Stabilisator in seiner Länge einzustellen. Diese Längenverstellbarkeit kann dabei nicht durch das Teleskop selbst erfolgen, da sich sonst der Arbeitspunkt der Feder erheblich mit der Breite des Anbaugerätes verstellen würde. Um diese Einstellbarkeit zu erzielen, ist der Kolben zweigeteilt und durch mindestens ein Gewinde längenverstellbar. Damit kann durch Drehen eines Teiles des Kolbens die Kolbenlänge derart eingestellt werden, dass der Stabilisator an die jeweiligen Bedürfnisse des Anbaugerätes angepasst werden kann. Der Stabilisator übt damit auf den Unter- bzw. Oberlenker der Drei-Punkt-Aufhängung des A-Ackerschleppers eine elastische Kraft aus, die das Anbaugerät bei zunehmender seitlicher Ausschwenkung gegenüber dem Ackerschlepper wieder in die gewünschte Spur zurück holt. Trotzdem kann das Anbaugerät seitliche Bewegungen ausführen, damit ein Pflug beispielsweise einem Stein im Boden ausweichen kann. Dieses während des Betriebes auf dem Feld erforderliche Verhalten des Anbaugeräts ist während der Überführung des Ackerschleppers im öffentlichen Straßenverkehr problematisch. Insbesondere bei Kurvenfahrten kann es zum Ausschwenken des Anbaugerätes kommen, wodurch der öffentliche Straßenverkehr in unzulässiger Weise gefährdet würde. Aus diesem Grund ist es erforderlich, dass das Teleskop des Stabilisators im öffentlichen Straßenverkehr blockiert ist. Damit wird eine Schwenkbewegung der Unter- bzw. Oberlenker der Drei-Punkt-Aufhängung des Ackerschleppers zuverlässig unterbunden. Um diese Arretierung auf einfache Weise realisieren zu können, ist am Rohr mindestens ein Arretierbügel schwenkbar gehalten. Dieser Arretierbügel übergreift in einer Arretierstellung mindestens ein Widerlager des Kolbens. Als Arretierstellung ist dabei jede Stellung zu verstehen, in der das Teleskop wenigstens teilweise blockiert ist Eine geringe Bewegbarkeit des Teleskops in der Arretierstellung spielt keine Rolle. In einer Lösestellung beeinflusst der Arretierbügel dagegen das Teleskop nicht, so dass es unter der Wirkung der mindestens einen Feder bewegbar ist. Damit wird der Stabilisator sowohl den Bedürfnissen des Betriebs auf dem Feld als auch im öffentlichen Straßenverkehr gerecht.

Es hat sich nun herausgestellt, dass insbesondere bei schweren Anbauteilen der Arretierbügel an der Verbindungsstelle zwischen den Anschlagflächen zum Widerlager brechen kann. Damit waren Verstärkungen des Arretierbügels in diesem Bereich erforderlich, die den Arretierbügel immer schwerer machten, was die Handhabbarkeit des Arretierbügels erheblich erschwerte. Zur Lösung dieses Problems wird vorgeschlagen, die Anschlagflächen des Arretierbügels durch Brücken zugfest zu verbinden. Diese Brücken übergreifen dabei zumindest eine Berührungsfläche des Widerlagers mit der Anschlagfläche außenseitig wenigstens teilweise. Damit werden Kräfte, die das Widerlager auf die äußere Anschlagfläche des Widerlagers ausübt, auf möglichst direktem Wege zur gegenüberliegenden Anschlagfläche weitergeleitet. Von dieser Anschlagfläche können diese Zugkräfte problemlos vom Arretierbügel an dessen Anlenkung abgestützt werden. Aufgrund dieses Aufbaus kann die gesamte Masse des Arretierbügels erheblich reduziert werden, wobei gleichzeitig höhere Stützlasten möglich sind.

Zur weiteren Verbesserung der Zugkraftübertragung ist es gemäß Anspruch 2 günstig, wenn die Brücken zumindest in einem Bereich einer Ebene vorgesehen ist, die einerseits von der Schwenkachse des Arretierbügels und andererseits von einer Längsachse des Kolbens aufgespannt wird. Damit wird die Zugkraft - zumindest in Projektion aus Richtung der Schwenkachse des Arretierbügels betrachtet - entlang einer Geraden und damit umlenkungsfrei abgeleitet. Damit entstehen keinerlei Biegemomente, die zum Brechen des Arretierbügels führen könnten.

Eine weitere Möglichkeit, die möglichen Stützlasten zu erhöhen, ohne ein zu hohes Gewicht des Stabilisators in Kauf nehmen zu müssen, besteht gemäß Anspruch 3 in der Ausbildung des Arretierbügels als wenigstens ein Blechbiegeteil oder Schmiedeteil. Aufgrund dieser Maßnahme kann der Arretierbügel aus einem höherwertigen Stahl hergestellt werden als dies bei Gussteilen nach dem Stand der Technik möglich wäre. Außerdem hat ein Blechbiegeteil bzw. ein Schmiedeteil eine wesentlich höhere Stoßfestigkeit, die es unempfindlich gegenüber Schlägen des Widerlagers macht. Auch durch diese Maßnahme wird daher die Bruchfestigkeit des Stabilisators verbessert.

Grundsätzlich kann der Arretierbügel von einem einzigen Blechbiege- oder Schmiedeteil gebildet sein. Zur Erzielung einer einfachen Herstellbarkeit und gleichzeitig einer möglichst geringen Masse des Arretierbügels ist es jedoch gemäß Anspruch 3 günstig, dass der Arretierbügel von mindestens zwei Blechbiege- und/oder Schmiedeteilen gebildet ist. Diese Teile sind dann mittels mindestens einer Schweißnaht miteinander verbunden. Damit kann der Arretierbügel sehr freizügig mit geringer Eigenmasse gefertigt werden.

Zur Erzielung einer hohen Formsteifigkeit des Arretierbügels ist es gemäß Anspruch 5 günstig, wenn der Arretierbügel das Rohr zumindest im Bereich einer Ebene übergreift, welche einerseits von der Schwenkachse des Arretierbügels und andererseits von der Längsachse des Kolbens aufgespannt ist. Damit werden Zug- und Druckkräfte von den Anschlagflächen des Arretierbügels auf direktem Wege in das Schwenklager des Arretierbügels abgeleitet. Damit können auch im Bereich zwischen der inneren Anschlagfläche und der Anlenkung des Arretierbügels keine schädlichen Biomomente entstehen.

Der Erfindungsgegenstand wird beispielhaft anhand der Zeichnung erläutert, ohne den Schutzumfang zu beschränken.
- Figur 1: zeigt eine räumliche Darstellung eines Stabilisators für einen Ackerschlepper,
- Figur 2: eine zugeordnete Schnittdarstellung des Stabilisators gemäß Figur 1,
- Figur 3: eine räumliche Darstellung einer zweiten Ausführungsform eines Stabilisators,
- Figur 4: eine erste alternative Ausführungsform des Arretierbügels,
- Figur 5: eine zweite alternative Ausführungsform des Arretierbügels und
- Figur 6: eine dritte alternative Ausführungsform des Arretierbügels.

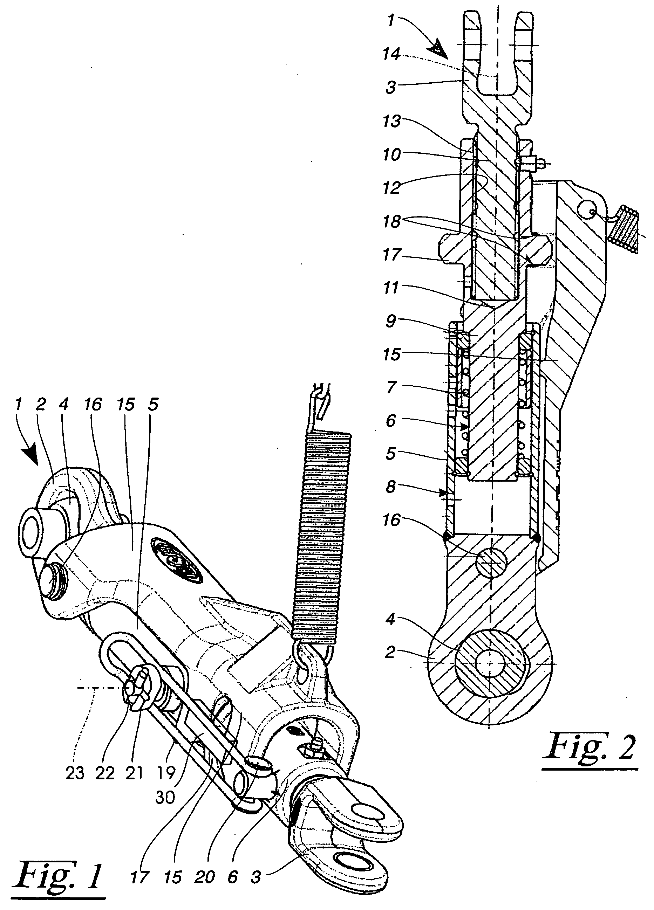

Ein Stabilisator 1 gemäß den Figuren 1 und 2 weist ein erstes Lager 2 und ein zweites Lager 3 auf. Üblicherweise wird das erste Lager 2 am Heck eines Ackerschleppers über eine Kugel 4 gehalten, während das zweite Lager 3 mit einem nicht dargestellten Unter- und/oder Oberlenker verbunden wird. Damit kann der Stabilisator 1 eine seitliche Bewegung des Unter- bzw. Oberlenkers beeinflussen.

Der Stabilisator 1 besteht aus einem Rohr 5, welches mit dem ersten Lager 2 verbunden ist. Im Rohr 5 ist ein Kolben 6 verschiebbar abgestützt. Zwischen dem Rohr 5 und dem Kolben 6 ist eine Feder 7 vorgesehen, die eine elastische Kopplung zwischen dem Rohr 5 und dem Kolben 6 erzeugt. Das Rohr 5 und der Kolben 6 bilden ein Teleskop 8, das eine gewisse Längenvariation des Stabilisators 1 erlaubt.

Der Kolben 6 ist zweistückig ausgebildet. Er besteht aus einem ersten Teil 9, an dem die Feder 7 angreift und einem zweiten Teil 10, das das zweite Lager 3 trägt. Im ersten Teil 9 des Kolbens 6 ist eine Sackbohrung 11 mit einem Innengewinde 12 vorgesehen, welches ein Außengewinde 13 des zweiten Teils 10 aufnimmt. Ist das zweite Lager 3 am Unter- bzw. Oberlenker festgelegt, so lässt es sich nicht um seine Längsachse 14 verdrehen. Durch Verdrehen des ersten Teils 9 des Kolbens 6 kann jedoch die Kolbenlänge entsprechend den jeweiligen Bedürfnissen eingestellt werden.

Um während der Fahrt im öffentlichen Straßenverkehr ein unerwünschtes Ausschwenken des Unter- bzw. Oberlenkers zuverlässig zu vermeiden, ist es notwendig, die Teleskopierbarkeit des Stabilisators 1 in diesem Anwendungsfall zu blockieren. Zu diesem Zweck ist am Rohr 5 ein Arretierbügel 15 um eine Achse 16 schwenkbar gehalten. Dieser Arretierbügel 15 übergreift ein als Scheibe ausgebildetes Widerlager 17 des Kolbens 6 beidseitig. Zu diesem Zweck weist der Arretierbügel 15 zwei Anschlagflächen 18 auf, die flächig am Widerlager 17 in der dargestellten Arretierstellung des Arretierbügels 15 anliegen. Der Arretierbügel 15 kann außerdem in einer nicht dargestellten Lösestellung verschwenkt werden, in der die Anschlagflächen 18 außer Eingriff mit dem Widerlager 17 verbunden sind. In dieser Stellung ist das Teleskop 8 frei bewegbar.

Um ein Verdrehen des ersten Teiles 9 des Kolbens 6 um seine Längsachse 14 auch in der Arretierstellung des Arretierbügels 15 zu ermöglichen, ist das Widerlager 17 im Wesentlichen rotationssymmetrisch ausgebildet. Damit kann jederzeit geprüft werden, ob der Stabilisator 1 bereits korrekt in seiner Länge eingestellt ist.

Um zu verhindern, dass der Kolben 6 unbeabsichtigt in seiner Länge verstellt wird, ist am Kolben 6 ein Verriegelungsbügel 19 schwenkbar abgestützt. Dieser Verriegelungsbügel 19 ist um eine Achse 20 verschwenkbar und kann in eine in Figur 2 dargestellte Verriegelungsstellung gebracht werden. In dieser Verriegelungsstellung übergreift der Verriegelungsbügel 19 ein weiteres Widerlager 21. Hierdurch wird eine Verdrehung des Kolbens 6 unterbunden, wobei die Teleskopierbarkeit des Stabilisators 1 je nach Stellung des Arretierbügels 15 möglich oder unterbunden ist. Das weitere Widerlager 21 besteht aus einem Druckknopf 22, der federnd vom Kolben 6 radial weggedrückt ist. Durch Eindrücken des Druckknopfs 22 entgegen der Federkraft kann er um eine Achse 23 verdreht werden. Dabei kann er aus der dargestellten Verriegelungsstellung in eine um 90 Grad verdrehte Lösestellung überführt werden, in der der Verriegelungsbügel 19 in die nicht dargestellte Lösestellung bringbar ist. In dieser Lösestellung befindet sich der Verriegelungsbügel 19 außer Eingriff mit dem weiteren Widerlager 21.

Zwischen den beiden Anschlagflächen 18 weist der Arretierbügel 15 beidseitig jeweils eine Brücke 30 auf, die über Lochschweißungen mit einem Grundkörper des Arretierbügels 15 verbunden ist. Diese Brücke 30 leitet Zugkräfte des Arretierbügels 15 auf direktem Wege in die Achse 16 ab und verhindert auf diese Weise Biegemomente innerhalb des Arretierbügels 15.

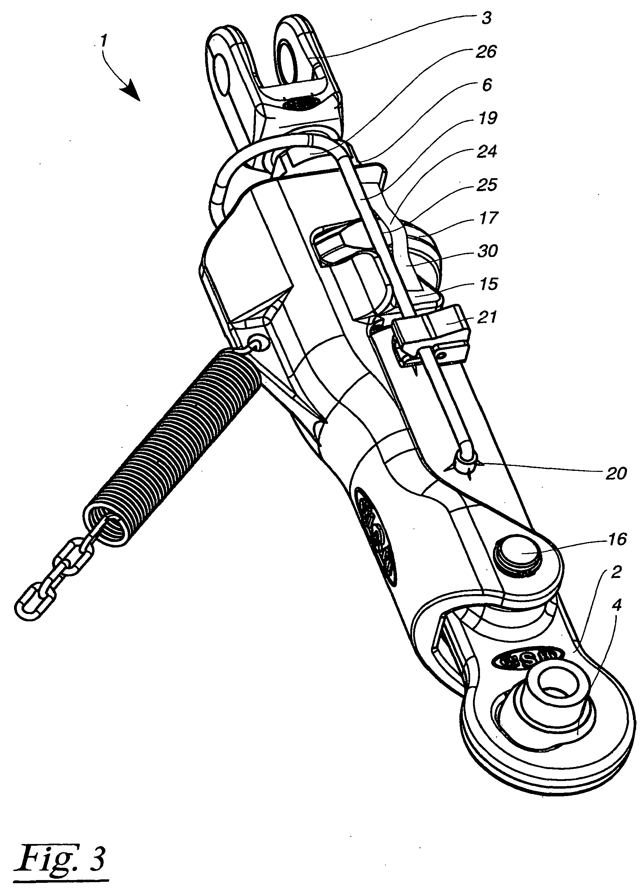

Die Figur 3 zeigt eine alternative Ausführungsform eines Stabilisators 1 gemäß Figur 1, wobei gleiche Bezugszeichen gleiche Teile benennen. Im Folgenden wird lediglich auf die Unterschiede zur Ausführungsform gemäß Figur 1 eingegangen.

Bei dieser Ausführungsform befindet sich die Achse 20 des Verriegelungsbügels 19 am Rohr 5 und kann nach oben verschwenkt werden. Der Verriegelungsbügel 19 umgreift das Widerlager 17 derart, dass das Widerlager 17 in der dargestellten Verriegelungsstellung nicht verdrehbar ist. Zu diesem Zweck besitzt das Widerlager 17 Abflachungen 24, in deren Mitte Einkerbungen 25 vorgesehen sind. In diese Einkerbungen 25 ist der Verriegelungsbügel 19 aufgenommen. Wirkt ein Drehmoment auf den Kolben 6, so wird dieser über das Widerlager 17 auf den Verriegelungsbügel 19 übertragen. Aufgrund der Abflachung 24 und der Einkerbung 25 müsste der Verriegelungsbügel 19 aufgespreizt werden, um diesem Drehmoment nachgeben zu können. Aufgrund seiner Stabilität und Bauart wird diese Aufspreizung jedoch verhindert, so dass eine Verdrehung des Kolbens 6 in dieser Verriegelungsstellung nicht möglich ist.

Der Verriegelungsbügel 19 ist durch das weitere Widerlager 21 in der dargestellten Verriegelungsstellung arretiert. Durch Betätigen dieses weiteren Widerlagers 21 kann der Verriegelungsbügel 19 frei um die Achse 20 verschwenkt werden. Dabei gerät er außer Eingriff mit dem Widerlager 17. Damit kann das Widerlager 17 und folglich auch der Kolben 6 bei geschlossenem Arretierbügel 15 verdreht werden.

Da mindestens vier Abflachungen 24 und Einkerbungen 25 am Widerlager 17 vorgesehen sind, ist eine feinfühligere Längenverstellung des Stabilisators 1 möglich als der Gewindesteigung des Innengewindes 12 und Außengewindes 13 entspricht.

Der Kolben weist außerdem vier Schlüsselflächen 26 auf. Diese Schlüsselflächen 26 dienen zur Verbindung mit einem nicht dargestellten Gabelschlüssel, um ein einfaches Verdrehen des Widerlagers 17 zu ermöglichen. Unter beengten Platzverhältnissen kann es vorkommen, dass eine volle Umdrehung des Gabelschlüssels nicht oder nur unter erschwerten Bedingungen möglich ist. Durch das Vorsehen von mindestens vier Schlüsselflächen kann der Schlüssel nach einer Drehung um 90° wieder neu an das nächste Paar Schlüsselflächen 26 angesetzt werden. Vorzugsweise wird der nicht dargestellte Gabelschlüssel über entsprechende Halter am Stabilisator 1 festgehalten, damit er zur Verstellung desselben sofort zur Hand ist. Als Halter ist insbesondere an einen Magnethalter gedacht.

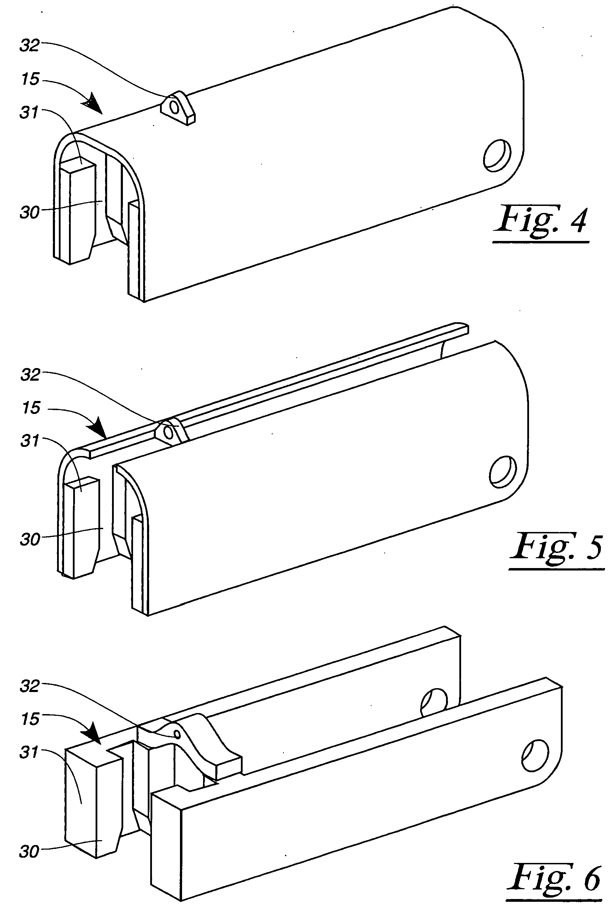

Die Figur 4 zeigt eine alternative Ausführungsform des Arretierbügels 15 in Form eines Blechbiegeteils. Der Arretierbügel 15 besteht dabei aus einem U-förmig gebogenen Blech. An diesem Blech sind innenseitig Blöcke 31 gehalten, die die Anschlagflächen 18 für das Widerlager 17 aufweisen. Die Blöcke 31 werden im einfachsten Fall mit dem U-förmigen Blech verschweißt. Das U-förmige Blech bildet dabei auch die Brücke 30 zwischen den Anschlagflächen 18. Das U-förmige Blech ist so weit nach unten gezogen, dass eine Verbindungslinie zwischen den Anschlagflächen 18 und der Achse 16 - in Projektion aus der Richtung der Achse 16 betrachtet - innerhalb des U-förmigen Blechteils liegt.

Die Figur 5 zeigt eine alternative Ausführungsform des Arretierbügels 15. Dieser ist zweiteilig gefertigt und besteht im Wesentlichen aus zwei L-förmig gebogenen Blechteilen. Beide Teile sind durch eine Traverse 32 miteinander verbunden. In diese Traverse 32 ist auch die nicht dargestellte Feder 7 eingehängt.

Schließlich zeigt die Figur 6 eine weitere Ausführungsform des Arretierbügels 15. Der Arretierbügel 15 besteht dabei aus zwei im Wesentlichen symmetrisch ausgebildeten Schmiedeteilen, die auch die Anschlagflächen 18 bilden. Diese sind wiederum mittels der Traverse 32 miteinander verbunden.

### Bezugszeichenliste

- 1: Stabilisator
- 2: erstes Lager
- 3: zweites Lager
- 4: Kugel
- 5: Rohr
- 6: Kolben
- 7: Feder
- 8: Teleskop
- 9: erster Teil
- 10: zweiter Teil
- 11: Sackbohrung
- 12: Innengewinde
- 13: Außengewinde
- 14: Längsachse
- 15: Arretierbügel
- 16: Achse
- 17: Widerlager
- 18: Anschlagfläche
- 19: Verriegelungsbügel
- 20: Achse
- 21: weiteres Widerlager
- 22: Druckknopf
- 23: Achse
- 24: Abflachung
- 25: Einkerbung
- 26: Schlüsselfläche
- 30: Brücke
- 31: Block
- 32: Traverse

## Patentansprüche

1. Stabilisator für einen Unter- und/oder Oberlenker einer Drei-Punkt-Aufhängung eines Ackerschleppers, wobei der Stabilisator (1) mindestens ein Teleskop (8), bestehend aus einem Rohr (5) und einem darin verschiebbar gehaltenen Kolben (6), aufweist, die miteinander durch mindestens eine Feder (7) elastisch gekoppelt sind, wobei der Kolben (6) durch mindestens ein Gewinde (12, 13) durch Drehen längenverstellbar ist, und am Rohr (5) mindestens ein Arretierbügel (15) schwenkbar gehalten ist, der in einer Arretierstellung mindestens ein Widerlager (17) des Kolbens (6) mittels - in Bewegungsrichtung des Kolbens (6) betrachtet - vor und hinter dem Widerlager (17) vorgesehenen Anschlagflächen (18) übergreift und in einer Lösestellung das Teleskops (8) frei bewegbar ist, **dadurch gekennzeichnet, dass** die Anschlagflächen (18) des Arretierbügels (15) beidseitig durch Brücken (30) zugfest verbunden sind, welche zumindest eine Berührfläche des Widerlagers (17) mit der Anschlagfläche (18) außenseitig wenigstens teilweise übergreifen.

2. Stabilisator nach Anspruch 1, **dadurch gekennzeichnet, dass** die Brücken (30) das Widerlager (17) zumindest in einem Bereich einer von der Schwenkachse (16) und einer Längsachse (14) des Kolbens (6) aufgespannten Ebene außenseitig übergreift.

3. Stabilisator nach Anspruch 1 oder 2 oder nach dem Oberbegriff des Anspruchs 1, **dadurch gekennzeichnet, dass** der Arretierbügel (15) mindestens ein Blechbiegeteil oder Schmiedeteil aufweist.

4. Stabilisator nach Anspruch 3, **dadurch gekennzeichnet, dass** mindestens zwei der Blechbiege- und/oder Schmiedeteile durch mindestens eine Schweißnaht verbunden sind.

5. Stabilisator nach mindestens einem der Ansprüche 1 bis 4, **dadurch gekennzeichnet, dass** der Arretierbügel (15) das Rohr (5) zumindest in einem Bereich einer von der Schwenkachse (16) und der Längsachse (14) des Kolbens (6) aufgespannten Ebene außenseitig übergreift.

## Claims

1. Stabilizer for a lower link and/or upper link of a three-point suspension system of an agricultural tractor, wherein the stabilizer (1) has at least one telescope (8) consisting of a tube (5) and a piston (6) held displaceably therein, said tube and piston being coupled elastically to each other by at least one spring (7), wherein the piston (6) can be adjusted in length by rotation by means of at least one thread (12, 13), and at least one retaining clip (15) is mounted pivotably on the tube (5), said retaining clip, in a retaining position, engaging over at least one abutment (17) of the piston (6) by means of stop surfaces (18) provided in front and behind the abutment (17), as seen in the movement direction of the piston (6), and, in a release position, the telescope (8) being freely moveable, **characterized in that** the stop surfaces (18) of the retaining clip (15) are connected in a tensionproof manner on both sides by means of bridges (30) which at least partially engage over the outer side of at least one contact surface of the abutment (17) by means of the stop surface (18).

2. Stabilizer according to Claim 1, **characterized in that** the bridges (30) engage over the outer side of the abutment (17) at least in a region of a plane spanned by the pivot axis (16) and a longitudinal axis (14) of the piston (6).

3. Stabilizer according to Claim 1 or 2 or according to the precharacterizing clause of Claim 1, **characterized in that** the retaining clip (15) has at least one sheet-metal bent part or forged part.

4. Stabilizer according to Claim 3, **characterized in that** at least two of the sheet-metal bent and/or forged parts are connected by means of at least one weld seam.

5. Stabilizer according to at least one of Claims 1 to 4, **characterized in that** the retaining clip (15) engages over the outer side of the tube (5) at least in a region of a plane spanned by the pivot axis (16) and the longitudinal axis (14) of the piston (6).

## Revendications

1. Stabilisateur pour un bras supérieur et/ou inférieur d'une suspension à trois points d'un tracteur agricole, le stabilisateur (1) présentant au moins une pièce télescopique (8) constituée d'un tube (5) et d'un piston (6) retenu de manière déplaçable dans celui-ci, lesquels sont accouplés l'un à l'autre élastiquement par le biais d'au moins un ressort (7), le piston (6) pouvant être réglé en longueur par rotation par le biais d'au moins un filetage (12, 13), et au moins un étrier de blocage (15) étant retenu de manière pivotante sur le tube (5), lequel étrier de blocage, dans une position de blocage, vient en prise par-dessus au moins une butée (17) du piston (6) au moyen de surfaces de butée (18) prévues avant et après la butée (17), vu dans la direction de déplacement du piston (6), et, dans une position de libération, la pièce télescopique (8) pouvant se déplacer librement, **caractérisé en ce que** les surfaces de butée (18) de l'étrier de blocage (15) sont connectées de manière résistant à la traction de chaque côté par le biais de ponts (30) qui viennent en prise au moins en partie du côté extérieur par-dessus au moins une surface de contact de la butée (17) par le biais de la surface de butée (18).

2. Stabilisateur selon la revendication 1, **caractérisé en ce que** les ponts (30) viennent en prise du côté extérieur par-dessus la butée (17) au moins dans une région d'un plan tendu par l'axe de pivotement (16) et un axe longitudinal (14) du piston (6).

3. Stabilisateur selon la revendication 1 ou 2, ou selon le préambule de la revendication 1, **caractérisé en ce que** l'étrier de blocage (15) présente au moins une partie en tôle pliée et/ou une partie forgée.

4. Stabilisateur selon la revendication 3, **caractérisé en ce qu'**au moins deux des parties en tôle pliée et/ou forgées sont connectées par au moins un cordon de soudure.

5. Stabilisateur selon au moins l'une quelconque des revendications 1 à 4, **caractérisé en ce que** l'étrier de blocage (15) vient en prise du côté extérieur par-dessus le tube (5) au moins dans une région d'un plan tendu par l'axe de pivotement (16) et l'axe longitudinal (14) du piston (6).
